# EUROPÄISCHE PATENTANMELDUNG

(11) **EP 2 282 131 A2**
(43) Veröffentlichungstag der Anmeldung: **09.02.2011**
(21) Anmeldenummer: 10166126.2
(22) Anmeldetag: 16.06.2010
(51) Int. Cl.: F24D 17/00

(54) **Verfahren zur Erwärmung von Brauchwasser**

(30) Priorität: 25.06.2009 AT 9792009
(71) Anmelder: VKR Holding A/S, 2970 Hørsholm (DK)
(72) Erfinder: Engelhart, Klaus, 3508, Höbenbach (AT)
(74) Vertreter: Babeluk, Michael

(57) **Zusammenfassung**

Die Erfindung betrifft ein Verfahren zur Erwärmung von Brauchwasser und gegebenenfalls zur Bereitstellung von Wärme zur Beheizung von Gebäuden mit einer ersten Wärmequelle (20), einem Speicherbehälter (2) und einem Brauchwasser-Wärmetauscher (21) zur Erwärmung von Brauchwasser. Ein einfaches, robustes und effizientes System wird dadurch erreicht, dass dass die erste Flut des Brauchwasser-Wärmetauschers (21) parallel zum Speicherbehälter (2) geschaltet ist und dass eine Regelungseinrichtung vorgesehen ist, die die erste Umwälzpumpe (22) und die zweite Umwälzpumpe (23) so ansteuert, dass in einem ersten Betriebszustand der Massenstrom des Wärmeträgermediums durch die erste Wärmequelle (20) größer ist als der Massenstrom des Wärmeträgermediums durch die erste Flut (21a) des Brauchwasser-Wärmetauschers (21) und in einem zweiten Betriebszustand der Massenstrom des Wärmeträgermediums durch die erste Wärmequelle (20) kleiner ist als der Massenstrom des Wärmeträgermediums durch die erste Flut (21a) des Brauchwasser-Wärmetauschers (21). Weiters betrifft die Erfindung eine Vorrichtung zur Durchführung des Verfahrens.

## Beschreibung

Die Erfindung betrifft ein Verfahren zur Erwärmung von Brauchwasser und gegebenenfalls zur Bereitstellung von Wärme zur Beheizung von Gebäuden gemäß dem Oberbegriff von Patentanspruch 1.

Insbesondere betrifft die Erfindung ein Verfahren mit einer ersten Wärmequelle, einem Speicherbehälter und einem Brauchwasser-Wärmetauscher zur Erwärmung von Brauchwasser, wobei die Durchströmung der ersten Wärmequelle mit einem Wärmeträgermedium durch eine erste Umwälzpumpe bewirkt wird und die Durchströmung einer ersten Flut des Brauchwasser-Wärmetauschers mit dem Wärmeträgermedium durch eine zweite Umwälzpumpe bewirkt wird.

Wenn zur Erwärmung von Brauchwasser alternative Energien wie beispielsweise Solarenergie eingesetzt wird, ist es erforderlich eine Wärmequelle vorzusehen, die den Bedarf abdeckt, wenn die Alternativenergie nicht in ausreichendem Maß zur Verfügung steht. Häufig angewandte Lösungen sehen einen Speicherbehälter vor, dessen Inhalt durch die alternative Energie erwärmt wird, soweit sie verfügbar ist. Die Erwärmung des Brauchwassers kann bei diesen Lösungen auf zwei unterschiedliche Arten erfolgen. Einerseits ist es möglich, Wärmeträgermedium aus dem Speicherbehälter zu entnehmen und das Brauchwasser über einen Wärmetauscher zu erwärmen, der von diesem Wärmeträgermedium durchflossen wird. Bei dieser Lösung ist es regelungstechnisch schwierig, eine konstante Brauchwassertemperatur zur Verfügung zu stellen. Eine alternative Lösung besteht darin, das Brauchwasser durch eine Rohrschlange im Inneren des Speicherbehälters zu erwärmen, wodurch sich die obigen Probleme teilweise vermeiden lassen. Problematisch ist hier allerdings, dass es insbesondere in Verbindung mit Warmwasserzirkulationssystemen schwierig ist, in allen Betriebszuständen eine Temperaturschichtung im Speicherbehälter aufrecht zu erhalten. Dadurch sinkt insbesondere bei Solaranlagen der Wirkungsgrad der Anlage. Ein weiterer Nachteil dieser Lösung besteht darin, dass bei besonders kompakten Anlagen mit relativ geringem Speichervolumen die konventionelle Wärmequelle relativ leistungsstark ausgebildet sein muss, um bei Belastungsspitzen ein Absinken der Brauchwassertemperatur zu vermeiden.

Ferner ist es bekannt, Brennwertthermen mit einem Brauchwassertank auszustatten, um Belastungsspitzen abzudecken. Dieser Brauchwassertank muss naturgemäß emailliert oder in Edelstahl ausgeführt sein, um eine Kontaminierung des Brauchwassers zu vermeiden. Ein solches System ist einerseits aufwändig und andererseits aufgrund der Gefahr einer Legionellenbildung aus gesundheitlichen Überlegungen unerwünscht.

Aufgabe der vorliegenden Erfindung ist es, diese Nachteile zu vermeiden und ein Verfahren anzugeben, mit dem es möglich ist, zur Verfügung stehende Alternativenergie bestmöglich auszunutzen und gleichzeitig mit einer konventionellen Wärmequelle relativ geringer Leistung, das Auslangen zu finden, ohne Einbußen in der Versorgung mit heißem Brauchwasser in Kauf nehmen zu müssen.

Eine weitere Aufgabe der vorliegenden Erfindung ist es, eine Vorrichtung zur Erwärmung von Brauchwasser anzugeben, die einfach aufgebaut ist und die dazu geeignet ist, ein Verfahren der oben beschriebenen Art durchzuführen.

Erfindungsgemäß werden diese Aufgaben durch die Merkmale von Patentanspruch 1 gelöst. Dabei ist vorgesehen, dass die erste Flut des Brauchwasser-Wärmetauschers parallel zum Speicherbehälter geschaltet ist und dass eine Regelungseinrichtung vorgesehen ist, die die erste Umwälzpumpe und die zweite Umwälzpumpe so ansteuert, dass in einem ersten Betriebszustand der Massenstrom des Wärmeträgermediums durch die erste Wärmequelle größer ist als der Massenstrom des Wärmeträgermediums durch die erste Flut des Brauchwasser-Wärmetauschers und in einem zweiten Betriebszustand der Massenstrom des Wärmeträgermediums durch die erste Wärmequelle kleiner ist als der Massenstrom des Wärmeträgermediums durch die erste Flut des Brauchwasser-Wärmetauschers. Wesentlich am erfindungsgemäßen Verfahren ist, dass es sich um ein Frischwassersystem handelt, das heißt, dass das Brauchwasser unmittelbar nach Erwärmung zum Verbraucher geführt wird und nicht in heißem Zustand zwischengespeichert wird. Damit wird der Gefahr der Bildung von Legionellen vermieden.

Ein weiterer wesentlicher Aspekt der vorliegenden Erfindung ist, dass aus Sicht der ersten Wärmequelle die erste Flut des Brauchwasser-Wärmetauschers parallel zum Speichebehälter geschalten ist. Im ersten Betriebszustand liegt ein geringer Wärmebedarf am Brauchwasser-Wärmetauscher vor, beispielsweise da Warmwasser in geringen Mengen entnommen wird. Aufgrund der herrschenden Temperaturverhältnisse kann die Wärme nicht vom Speicherbehälter zur Verfügung gestellt werden, weshalb die erste Wärmequelle in Betrieb genommen wird. Die erste Umwälzpumpe fördert Wärmeträgermedium durch die erste Wärmequelle, so dass an der stromabwärtigen Seite die gewünschte Ausgangstemperatur erreicht wird. Gleichzeitig wird die zweite Umwälzpumpe so angesteuert, dass die gewünschte Brauchwassertemperatur genau eingehalten wird. Da der Wärmebedarf am Brauchwasserwärmetauscher in diesem Betriebszustand jedoch geringer ist als die von der ersten Wärmequelle angebotene Leistung, wird nur ein Teil des Wärmeträgermediums aus der ersten Wärmequelle durch den Brauchwasserwärmetauscher geführt. Der übrige Teil durchströmt den Speicherbehälter von oben nach unten, wodurch sein Inhalt unter geringst möglicher Störung einer allfällig vorliegenden Temperaturschichtung erwärmt wird.

Im zweiten Betriebszustand ist der Wärmebedarf am Brauchwasser-Wärmetauscher im Gegensatz zu den oben beschriebenen Verhältnissen größer als die Maximalleistung, die von der ersten Wärmequelle zur Verfügung gestellt werden kann. Dies kann beispielsweise bei der Warmwasserentnahme an mehreren Zapfstellen der Fall sein oder beim Befüllen einer Badewanne. In diesem Betriebszustand wird die zweite Umwälzpumpe mit großer Durchsatzleistung betrieben, um am Brauchwasserwärmetauscher die erforderliche thermische Leistung zur Verfügung zu stellen. Die Durchflussmenge durch die erste Flut des Brauchwasser-Wärmetauschers ist dann größer als die Durchflussmenge durch die erste Wärmequelle. Daher ergibt sich eine Umkehrung der Strömungsrichtung in der Hochtemperaturleitung zwischen der Anschlussstelle des Brauchwasser-Wärmetauschers und dem Speicherbehälter. Die zweite Umwälzpumpe saugt nämlich nunmehr aus dem oberen Abschnitt des Speicherbehälters heißes Wärmeträgermedium an und pumpt dieses gemeinsam mit dem Wärmeträgermedium, das durch die erste Wärmequelle erwärmt worden ist, durch die erste Flut des Brauchwasser-Wärmetauschers. Auf diese Weise können Spitzen im Brauchwasserbedarf problemlos ausgeglichen werden.

Ein dritter Betriebszustand, der auch als Spezialfall des zweiten Betriebszustands angesehen werden kann, ist gegeben, wenn im Speicherbehälter ausreichend heißes Wärmeträgermedium zur Verfügung steht, um den Brauchwasser-Wärmetauscher zu bedienen. In diesem Fall ist die erste Wärmequelle nicht in Betrieb und der Brauchwasser-Wärmetauscher wird ausschließlich durch die zweite Umwälzpumpe mit Wärmeträgermedium aus dem Speicherbehälter versorgt. Da die erste Umwälzpumpe naturgemäß nicht in Betrieb ist, ist auch hier das Kriterium erfüllt, dass der Massenstrom des Wärmeträgermediums durch die erste Flut des Brauchwasser-Wärmetauschers größer ist als der Massenstrom durch die erste Wärmequelle, der hier Null ist. Die Entscheidung über das Einschalten bzw. Ausschalten der ersten Wärmequelle wird in Abhängigkeit von dem Signal eines Temperatursensors getroffen, der beispielsweise im oberen Viertel des Speicherbehälters angeordnet ist, so dass das Speichervolumen oberhalb dieses Temperatursensors die Minimalspeichermenge an heißem Wärmeträgermedium darstellt, die jederzeit vorgehalten wird.

Ein wesentlicher Vorteil des erfindungsgemäßen Verfahren liegt einerseits in dem optimalen Regelverhalten, da durch die doppelte Ansteuerung des Brauchwasser-Wärmetauschers ein sehr schnelles Ansprechen auf Belastungsspitzen erreicht werden kann. Darüber hinaus kann eine nach dem erfindungsgemäßen Verfahren arbeitende die Anlage mit einem relativ kleinen und leistungsschwachen Gerät zur konventionellen Wärmeerzeugung bestückt werden. Insbesondere ist es nicht erforderlich, einen modulierenden Betrieb für die erste Wärmequelle vorzusehen, was eine weitere Vereinfachung bewirkt.

Besonders günstig ist es, wenn bei Überschreitung einer vorbestimmten Temperatur im Brauchwasser-Wärmetauscher ein Teilstrom des Wärmeträgermediums über ein erstes Mischventil und eine Mischleitung durch die zweite Umwälzpumpe im Kreislauf geführt wird. Um den Speicherbehälter optimal ausnützen zu können, ist es wünschenswert, die Maximaltemperatur des Wärmeträgermediums auf einen möglichst großen Wert festzusetzen. Bei reinem Speicherbetrieb würde nun der Brauchwasserwärmetauscher mit Wärmeträgermedium durchströmt werden, das beispielsweise eine Temperatur von 90°C oder mehr aufweisen kann, was zu einer verstärken Kalkablagerung führt. Durch das erste Mischventil kann die thermische Belastung im Bereich der ersten Flut des Brauchwasser-Wärmetauschers entsprechend verringert werden, was die Verkalkungsneigung reduziert.

Eine zusätzliche Ausnutzung von Wärme, die auf einem niedrigeren Temperaturniveau im Speicherbehälter zur Verfügung steht, kann dadurch erfolgen, dass das Brauchwasser in einem Wärmetauscher im Speicherbehälter vorerwärmt wird. Im Idealfall kann durch diese Vorerwärmung bereits ein Temperaturniveau des Brauchwassers erreicht werden, das der Solltemperatur entspricht oder über der Solltemperatur liegt. In diesem Fall braucht die zweite Umwälzpumpe nicht in Betrieb genommen zu werden, so dass das Brauchwasser den Brauchwasser-wärmetauscher ohne weitere Erwärmung durchfließt. Bei zu hoher Temperatur des Brauchwassers wird in einem zweiten Mischventil Kaltwasser zugemischt, um die Solltemperatur einzustellen.

Im Hinblick auf den Gesamtwirkungsgrad ist es besonders günstig, wenn im Speicherbehälter eine Temperaturschichtung aufrechterhalten wird und wenn im ersten Betriebszustand das von der ersten Wärmequelle erwärmte Wärmeträgermedium in einen oberen Bereich des Speicherbehälters eingespeist wird, während hingegen im zweiten Betriebszustand das aus der ersten Flut des Brauchwasser-Wärmetauschers austretende Wärmeträgermedium in einen unteren Bereich des Speicherbehälters eingespeist wird. Der hier erwähnte untere Bereich des Brauchwasserwärmetauschers muss nicht zwangsläufig der tiefste Punkt sein, da unterhalb des Speicherbereichs für den Brauchwasserkreislauf auch noch ein weiterer Bereich für den oben erwähnten Wärmetauscher zur Vorerwärmung des Brauchwassers angeordnet sein kann.

Besonders vorteilhaft ist es, wenn die Ansteuerung der ersten Umwälzpumpe und der zweiten Umwälzpumpe kontinuierlich erfolgt, so dass die Durchflussmengen in den jeweiligen Leitungsabschnitten stufenlos veränderlich sind. Dies wird durch drehzahlgeregelte Pumpen erreicht. Auf diese Weise ist es möglich, die Solltemperatur des Brauchwassers besonders genau einzuhalten.

Eine besondere Vereinfachung des erfindungsgemäßen Verfahrens ist gegeben, wenn das Wärmeträgermedium zu Brauchwasserbereitung direkt in ein Heizungssystem eingespeist wird. Auf diese Weise ist es auch möglich, die zusätzliche Wärmeübertragung über einen Wärmetauscher zu vermeiden, wodurch eine bessere Ausnützung der Energie erfolgt, da der ansonsten unvermeidliche Temperaturabfall von 3 K bis 5 K im Wärmetauscher vermieden wird. Eine besonders bevorzugte Ausführungsvariante dieser Lösung ist gegeben, wenn das Wärmeträgermedium für ein erstes Heizungssystem einer Hochtemperaturleitung entnommen wird, die die stromabwärtige Seite der ersten Wärmequelle mit dem Speicherbehälter verbindet, während das Wärmeträgermedium für ein zweites Heizungssystem einer Niedertemperaturleitung entnommen wird, die die stromaufwärtige Seite der ersten Wärmequelle mit dem Speicherbehälter verbindet. Beim ersten Heizsystem handelt es sich typischerweise um einen Radiatorkreislauf, bei dem höhere Temperaturen erforderlich sind. Beim zweiten Heizungssystem handelt es sich beispielsweise um einen Fußboden- oder Wandheizungssystem, das mit wesentlich geringeren Temperaturen das Auslangen findet.

Die Temperaturschichtung im Speicherbehälter kann besonders vorteilhaft dadurch aufrecht erhalten werden, dass der Rücklauf mindestens eines Heizungssystems unterhalb der Anschlüsse des Brauchwasser-Erwärmungssystems in den Speicherbehälter rückgeführt wird.

Die Standardbauweise von Solaranlagen besteht darin, dass ein Wärmeträgermedium durch den Solarkollektor in einem geschlossenen Kreislauf geführt wird. Da der Solarkollektor dabei stets gefüllt bleibt, ist es erforderlich, entsprechende technische Vorkehrungen zu treffen, um einen sicheren Betrieb zu gewährleisten, wie etwa Frostschutzmittel, Ausgleichsbehälter und dergleichen. In bestimmten Anwendungsfällen ist jedoch eine Vereinfachung dieses Aufbaus erwünscht, um eine besondere Robustheit und Kosteneffizienz zu erreichen. Aus diesem Grund sind Solaranlagen entwickelt worden, bei denen der Solarkollektor nur bei Betrieb mit Wärmeträgermedium geflutet ist und ansonsten entleert wird. Eine solche Anlange ist in der DE 20 20 6564 U offenbart. Bei einer solchen Anlage wird das Wärmeträgermedium einem Speicherbehälter entnommen und zur Erwärmung durch den Solarkollektor gepumpt, wenn ein entsprechendes Wärmeangebot vorliegt. Bei Stillstand der Pumpe entleert sich der Solarkollektor, so dass auch ohne Frostschutzmittel keine Gefahr des Einfrierens besteht. Darüber hinaus kann bei bereits vol geladenem Speicher ein Überhitzen oder Verdampfen der Flüssigkeit verhindert werden, wodurch die Gefahren der Stagnation vermieden werden.

Nachteilig der gegebenen Lösung ist, dass für die Nutzung der Wärme in einer Gebäudeheizung mindestens ein Wärmetauscher erforderlich ist, und dass es bei starker Sonneneinstrahlung und geringem Verbrauch zu Verlusten an Wärmeträgermedium durch Verdunsten kommen kann. Zusätzlich kann durch die Aufnahme von Sauerstoff aus der Luft Korrosion auftreten.

Darüber hinaus zeigt die US 4,269,167 A ein geschlossenes System aus Solarkollektor, Ausgleichsbehälter und Wärmetauscher. Durch eine mögliche Druckbeaufschlagung kann die Verdampfungs- und Sauerstoff-Problematik verringert werden, es besteht aber weiterhin der Nachteil der mangelnden Effizienz und des erforderlichen Aufwands.

Es ist nun wünschenswert, diese Nachteile zu vermeiden und eine Lösung anzugeben, die einfach, kostengünstig, robust und effizient zu gleich ist. Mit robust ist nicht nur eine Unempfindlichkeit im mechanischen Sinne gemeint, sondern auch ein unproblematisches Regelverhalten. Effizient bedeutet hauptsächlich einen hohen Wirkungsgrad und eine gute Ausnützung des Wärmeangebots.

Gemäß einer weiteren bevorzugten Ausführungsvariante der Erfindung ist vorgesehen, dass ein Solarkollektor bei Sonneneinstrahlung mit dem Wärmeträgermedium gefüllt und durchströmt wird, um das Wärmeträgermedium zu erwärmen, und bei dem der Solarkollektor ansonsten entleert wird, wobei das Wärmeträgermedium in einem Speicherbehälter gesammelt wird, und wobei das Wärmeträgermedium im Speicherbehälter und im Solarkollektor unter erhöhtem Druck gehalten wird, und dass der Speicherbehälter in allen Betriebszuständen teilweise mit Wärmeträgermedium und teilweise mit Gas gefüllt ist. Wesentlich dabei ist die Tatsache, dass das Gesamtsystem stets unter einem Druck gehalten wird, wodurch mehrere Ziele gleichzeitig erreicht werden.

Durch diese Lösung kann das unter Druck vorliegende Wärmeträgermedium direkt zur Gebäudeheizung verwendet werden, so dass jeglicher Wärmetauscher im Heizsystem vermieden werden kann. Typischerweise bedeutet ein Wärmetauscher einen Temperaturverlust von etwa 3 K bis 5 K, was zu einer entsprechenden Einbuße im Wirkungsgrad führt. Gleichzeitig aber entfällt bei der erfindungsgemäßen Lösung die Notwendigkeit für den Einbau von herkömmlichen Ausgleichsbehältern, da der Speicherbehälter selbst als Ausgleichsbehälter dient. Durch die Erhöhung des Siedepunktes des Wärmeträgermediums kann dieses im Solarkollektor auf höhere Temperaturen erwärmt werden. Typischerweise besteht das Wärmeträgermedium hauptsächlich aus Wasser, das unter Normaldruck bei 100°C siedet. Mit der erfindungsgemäßen Lösung können durchaus auch Temperaturen von 120°C bis 140°C zugelassen werden. In Folge des geschlossenen Systems kommt es zu keinen Verlusten an Wärmeträgermedium.

Im einfachsten Fall wird als Gas Luft eingesetzt, wobei aber auch Systeme mit Stickstofffüllung sinnvoll sind. Der Druck im System wird typischerweise auf einen Wert zwischen 2 bar und 5 bar eingestellt.

Weiters betrifft die vorliegende Erfindung Vorrichtung zur Erwärmung von Brauchwasser und gegebenenfalls zur Bereitstellung von Wärme zur Beheizung von Gebäuden, mit einer ersten Wärmequelle, einem Speicherbehälter und einem Brauchwasser-Wärmetauscher zur Erwärmung von Brauchwasser, wobei die stromabwärtige Seite der ersten Wärmequelle über eine Hochtemperaturleitung mit dem Speicherbehälter verbunden ist und die stromaufwärtige Seite der ersten Wärmequelle über eine Niedertemperaturleitung mit dem Speicherbehälter verbunden ist, und mit einer ersten Umwälzpumpe, die die Durchströmung der ersten Wärmequelle bewirkt.

Diese Vorrichtung ist erfindungsgemäß dadurch gekennzeichnet, dass eine erste Flut des Brauchwasser-Wärmetauschers mit einer in Serie geschalteten zweiten Umwälzpumpe von der Hochtemperaturleitung versorgt ist und in die Niedertemperaturleitung entwässert und dass die zweite Umwälzpumpe unabhängig von der ersten Umwälzpumpe ansteuerbar ist. Die erfindungsgemäße Vorrichtung zeichnet sich durch eine erhöhte Versorgungssicherheit an heißem Brauchwasser aus, auch wenn eine erste Wärmequelle mit relativ geringer Leistung eingesetzt wird. Darüber hinaus wird die verfügbare Alternativenergie bestmöglich ausgenutzt.

Eine besondere Energieeffizienz zur Vorerwärmung des Brauchwassers kann dadurch erreicht werden, dass im Speicherbehälter ein weiterer Wärmetauscher vorgesehen ist, dessen stromaufwärtige Seite mit einem Kaltwasseranschluss verbunden ist und dessen stromabwärtige Seite mit einem zweiten Mischventil verbunden ist, das an eine zweite Flut des Brauchwasser-Wärmetauschers angeschlossen ist.

Ein besonders einfacher Aufbau der Vorrichtung kann dadurch erreicht werden, dass zur Erwärmung des Wärmeträgermediums als zweite Wärmequelle ein Solarkollektor vorgesehen ist und dass das System aus Solarkollektor, Speicherbehälter, erster Wärmequelle und gegebenenfalls Heizungssystem als geschlossenes, unter Druck mit einem einzigen Wärmeträgermedium füllbares System ausgebildet ist und dass der Speicherbehälter zusätzlich zum Wärmeträgermedium mit Gas füllbar ist.

Als erste Wärmequelle bietet sich beispielsweise ein Gasbrennwertgerät an, es sind aber auch Stirling-Motoren, Brennkraftmaschinen oder Brennstoffzellen besonders vorteilhaft einsetzbar. Der Grund dafür liegt in der Tatsache, dass es aus Kostengründen notwendig ist, solche Geräte mit relativ geringer Leistung auszustatten und es in der Regel wirtschaftlich nicht möglich ist, einen modulierenden Betrieb vorzusehen. Die vorliegende Erfindung bietet optimale Einsatzmöglichkeiten für solche Geräte.

Ein weiterer besonderer Vorteil der erfindungsgemäßen Lösung besteht darin, dass die gesamte Vorrichtung als integriertes Kompaktgerät in Standartabmessungen darstellbar ist. Für einen einzelnen Haushalt kann dieses Gerät in der Baugröße von 60 x 60 x 200 cm integriert werden und stellt die gesamte Brauchwasser- und Heizungsversorgung zur Verfügung.

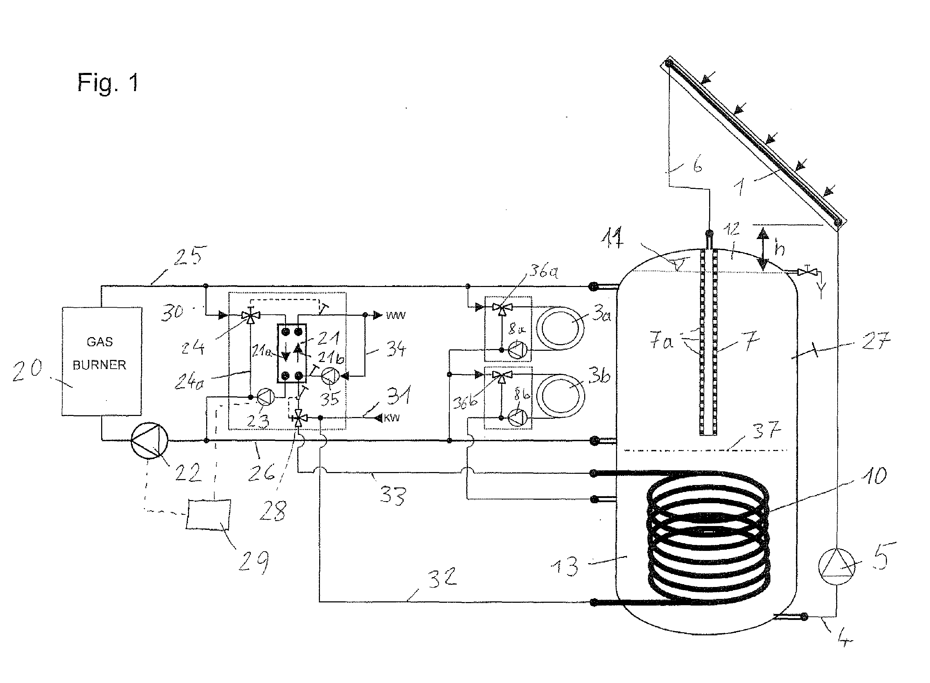

In der Folge wird die vorliegende Erfindung anhand des in der Fig. dargestellten Ausführungsbeispiels näher erläutert. Die Fig. 1 zeigt schematisch ein Schaltungsdiagramm einer erfindungsgemäßen Vorrichtung.

Die erfindungsgemäße Vorrichtung besteht aus einem Solarkollektor 1 und einem Speicherbehälter 2. Über eine Zufuhrleitung 4, die von der Unterseite des Speicherbehälters 2 ausgeht, wird der Solarkollektor 1 über eine Förderpumpe 5 mit Wärmeträgermedium versorgt, das nach Erwärmung über eine Rückführleitung 6 in ein Schichtungsrohr 7 und damit in den Speicherbehälter 2 mündet. Im Schichtungsrohr 7 ist eine Vielzahl vertikal übereinander angeordneter Rückströmöffnungen 7a vorgesehen, so dass eine im Speicherbehälter 2 vorliegende Temperaturschichtung nicht gestört wird.

Im oberen Bereich 12 des Speicherbehälters 2 ist ein Luftraum ausgebildet, indem Luft unter einem Druck von etwa 3 bar vorliegt, wobei das Volumen dieses Luftraumes jedenfalls größer ist als das Volumen des Solarkollektors 1 und der relevanten Leitungsabschnitte 4 zum bzw. 6 vom Solarkollektor 1. Wird nun die Förderpumpe 5 abgeschaltet, so strömt das Wärmeträgermedium entgegen der Förderrichtung der Förderpumpe 5 vom Solarkollektor 1, der um eine Mindesthöhe h oberhalb des Speicherbehälter 2 angeordnet ist, in diesen zurück, und es wird über die Rücklaufleitung 6 Luft aus dem oberen Abschnitt 12 des Speicherbehälters 2 in den Solarkollektor 1 nachgesaugt. Dadurch steigt der Flüssigkeitsspiegel 11 im Speicherbehälter 2 an und der Luftraum wird verkleinert. Das System wird jedoch so betrieben, dass jedenfalls ein minimaler Luftraum im Speicherbehälter 2 verbleibt. Durch die vollständige Entleerung des Solarkollektors 1 wird die Gefahr des Einfrierens bei entsprechend niedrigen Temperaturen völlig vermieden. Andererseits kann der Solarkollektor 1 auch bei einem nicht verbrauchbaren Überangebot an Wärme geleert werden, so dass die Gefahren der Überhitzung und Stagnation vermieden werden.

Der Luftraum 12 im Speicherbehälter 2 dient gleichzeitig auch als Ausgleichsraum für das Heizungssystem 3a, 3b, das auf diese Weise auf einem passenden Druckniveau gehalten wird.

In der Folge wird nun die Brauchwassererwärmung und das Heizungssystem beschrieben. Vom Speicherbehälter 2 führt eine Niedertemperaturleitung 26 zunächst zu einer ersten Umwälzpumpe 22 und durch eine erste Wärmequelle 20 zu einer Hochtemperaturleitung 25, die in den oberen Bereich des Speicherbehälters 2 mündet. Von der Hochtemperaturleitung 25 zweigt eine Brauchwasser-Erwärmungsleitung 30 ab, führt durch eine erste Flut 21a eines Brauchwasser-Wärmetauschers 21 zu einer zweiten Umwälzpumpe 23 und mündet an der stromaufwärtigen Seite der ersten Umwälzpumpe 22 in die Niedertemperaturleitung 26. In der Brauchwasser-Erwärmungsleitung 30 ist ein erstes Mischventil 24 vorgesehen, von dem eine Misch-Leitung 24a ausgeht, die stromabwärts der zweiten Umwälzpumpe 23 in die Brauchwasser-Erwärmungsleitung 30 einmündet. Durch dieses erste Mischventil 24 und die Mischleitung 24a kann ein Teilstrom des Wärmeträgermediums durch die zweite Umwälzpumpe 23 im Kreislauf geführt werden, so dass das Temperaturniveau in der ersten Flut 21a des Brauchwasser-Wärmetauschers 21 begrenzbar ist, was die Kalkablagerung verringert.

Vom Kaltwasseranschluss 31 zweigt eine Kaltwasser-Vorerwärmungsleitung 32 ab, die zum weiteren Wärmetauscher 10 führt, der als Spiralrohrwärmetauscher im unteren Bereich des Speicherbehälters 2 angeordnet ist. Das vorerwärmte Kaltwasser wird über eine weitere Leitung 33 zu einem zweiten Mischventil 28 geführt, in dem das vorerwärmte Kaltwasser aus der weiteren Leitung 33 gegebenenfalls mit Kaltwasser direkt vom Anschluss 31 vermischt wird, um die Maximaltemperatur entsprechend zu begrenzen. In weiterer Folge wird das Brauchwasser durch die zweite Flut 21b des Brauchwasserwärmetauschers 21 geführt und auf die gewünschte Solltemperatur erwärmt. Mit 34 ist eine Zirkulationsleitung angedeutet, die über eine Zirkulationspumpe 35 versorgt wird.

Weiters sind zwei Heizungssysteme 3a, 3b vorgesehen, wobei es sich beim ersten Heizungssystem 3a um ein solches mit höherer Temperatur handelt, wie beispielsweise ein Radiatorensystem. Das zweite Heizungssystem 3b hingegen ist ein Niedertemperaturheizungssystem, wie beispielsweise ein Fußboden- oder Wandheizungssystem.

Das erste Heizungssystem 3a wird von der Hochtemperaturleitung 25 versorgt und verfügt über eine Heizungsumwälzpumpe 8a und ein Heizungsmischventil 36a. In analoger Weise ist das zweite Heizungssystem 3b mit einer Heizungsumwälzpumpe 8b und einem Heizungsmischventil 36 versehen.

Der Rücklauf des ersten Heizungssystems 3a mündet letztlich in der Niedertemperaturleitung 26, während der Rücklauf des zweiten Heizungssystems 3b unterhalb des Anschlusses für die Niedertemperaturleitung 26 und eines Schichtblechs 37 in den Speicherbehälter 2 mündet.

Im oberen Viertel des Speicherbehälters 2 ist ein Temperatursensor 27 angebracht, der die Temperatur des Wärmeträgermediums an dieser Stelle erfasst. In Abhängigkeit von dem hier gemessenen Wert für die Temperatur wird die erste Wärmequelle 20 ein- und ausgeschaltet. Eine Steuerungseinrichtung 29 steuert insbesondere die Umwälzpumpen 22 und 23 an, legt aber auch die Stellung der Ventile 24, 28, 36a und 36b fest.

In der Folge wird der Betrieb der erfindungsgemäßen Vorrichtung erläutert.

Erfasst der Temperatursensor 27 eine Temperatur im Speicherbehälter, die geringer ist als eine vorgegebene Solltemperatur, wird die erste Heizeinrichtung 20 im Betrieb gesetzt, um den Speicherbehälter 2 aufzuladen. Die Solltemperatur bei 27 liegt typischerweise geringfügig höher als die gewünschte Brauchwasser-Solltemperatur, beträgt also beispielsweise 60°C bei einer Brauchwasser-Solltemperatur von 55°C. Über die erste Umwälzpumpe 22 wird Wärmeträgermedium aus dem Speicherbehälter 2 oberhalb des Schichtblechs 37 entnommen und in den oberen Bereich des Speicherbehälters 2 rückgeführt. Liegt am Brauchwasser-Wärmetauscher 21 kein Wärmebedarf vor, so wird die Gesamtleistung der ersten Wärmequelle 20 zur Aufladung des Speicherbehälters 2 verwendet. Wenn am Brauchwasser-Wärmetauscher 21 ein geringer Wärmebedarf vorliegt, dann wird durch Ansteuerung der zweiten Umwälzpumpe 22 ein Teilstrom aus der Hochtemperaturleitung 25 abgezweigt und zur Erwärmung des Brauchwassers eingesetzt. Mit dem restlichen Teilstrom wird weiterhin der Speicherbehälter 2 aufgeladen.

Übersteigt der Wärmebedarf für Brauchwasser die von der ersten Wärmequelle 20 gelieferte Wärmemenge, dann wird im zweiten Betriebszustand die zweite Umwälzpumpe 23 so angesteuert, dass ihre Fördermenge die der ersten Umwälzpumpe 22 übersteigt. Auf diese Weise wird in der Hochtemperaturleitung 25 die Strömungsrichtung umkehrt und es wird heißes Wärmeträgermedium von der Oberseite des Speicherbehälters 2 angesaugt. Auf diese Weise ist es möglich, ausreichend Energie am Brauchwasser-Wärmetauscher 21 bereitzustellen.

Liegt jedoch beim Temperatursensor 27 eine ausreichend hohe Temperatur vor, wird die Umwälzpumpe 22 nicht in Betrieb genommen und die erste Wärmequelle nicht eingeschaltet. Der Brauchwasser-Wärmetauscher 21 wird durch die zweite Umwälzpumpe 23 nun lediglich mit dem Wärmeträgermedium aus dem Speicherbehälter 2 versorgt. Sollte die Temperatur in der Hochtemperaturleitung 25 wesentlich höher sein als die Brauchwasser-Solltemperatur wird durch das erste Mischventil 24 ein Teilstrom des Wärmeträgermediums im Kreis geführt, wie dies oben bereits beschrieben worden ist.

Die Heizungsumwälzpumpen 8a, 8b können in die Regelung der Brauchwasserbereitung einbezogen werden. So ist es beispielsweise möglich, bei extrem hohem Brauchwasserbedarf die Heizungsumwälzpumpen 8a und 8b entsprechend zurückzufahren, um der Brauchwasserbereitung Priorität einzuräumen.

Alternativ zu der in Fig. 1 dargestellten Lösung kann die Versorgung des ersten Heizsystems 3a auch direkt vom Speicherbehälter 2 erfolgen und nicht von der Hochtemperaturleitung 25. Vorteilhafterweise wäre in diesem Fall der Anschluss am Speicherbehälter 2 etwas unterhalb des Anschlusses für die Hochtemperaturleitung 25, so dass der oberste Speicherbereich für die Brauchwasserbereitung reserviert bleibt. Auch dies ist eine Maßnahme zur Priorisierung der Brauchwasserbereitung.

Die erfindungsgemäße Lösung ermöglicht es, ein kompaktes integriertes System mit hoher Zuverlässigkeit und hoher Energieeffizienz darzustellen.

## Patentansprüche

1. Verfahren zur Erwärmung von Brauchwasser und gegebenenfalls zur Bereitstellung von Wärme zur Beheizung von Gebäuden mit einer ersten Wärmequelle (20), einem Speicherbehälter (2) und einem Brauchwasser-Wärmetauscher (21) zur Erwärmung von Brauchwasser, wobei die Durchströmung der ersten Wärmequelle (20) mit einem Wärmeträgermedium durch eine erste Umwälzpumpe (22) bewirkt wird und die Durchströmung einer ersten Flut (21a) des Brauchwasser-Wärmetauschers (21) mit dem Wärmeträgermedium durch eine zweite Umwälzpumpe (23) bewirkt wird, **dadurch gekennzeichnet, dass** die erste Flut des Brauchwasser-Wärmetauschers (21) parallel zum Speicherbehälter (2) geschaltet ist und dass eine Regelungseinrichtung vorgesehen ist, die die erste Umwälzpumpe (22) und die zweite Umwälzpumpe (23) so ansteuert, dass in einem ersten Betriebszustand der Massenstrom des Wärmeträgermediums durch die erste Wärmequelle (20) größer ist als der Massenstrom des Wärmeträgermediums durch die erste Flut (21a) des Brauchwasser-Wärmetauschers (21) und in einem zweiten Betriebszustand der Massenstrom des Wärmeträgermediums durch die erste Wärmequelle (20) kleiner ist als der Massenstrom des Wärmeträgermediums durch die erste Flut (21a) des Brauchwasser-Wärmetauschers (21).

2. Verfahren nach Anspruch 1, **dadurch gekennzeichnet, dass** bei Überschreitung einer vorbestimmten Temperatur im Brauchwasser-Wärmetauscher (21) ein Teilstrom des Wärmeträgermediums über ein erstes Mischventil (24) und eine Mischleitung (24a) durch die zweite Umwälzpumpe (23) im Kreislauf geführt wird.

3. Verfahren nach einem der Ansprüche 1 oder 2, **dadurch gekennzeichnet, dass** das Brauchwasser in einem Abschnitt des Speicherbehälters (2) vorerwärmt wird und danach durch eine zweite Flut (21b) des Brauchwasser-Wärmetauschers (21) geführt wird.

4. Verfahren nach einem der Ansprüche 1 bis 3, **dadurch gekennzeichnet, dass** im Speicherbehälter (2) eine Temperaturschichtung aufrechterhalten wird und dass im ersten Betriebszustand das von der ersten Wärmequelle erwärmte Wärmeträgermedium in einen oberen Bereich des Speicherbehälters (2) eingespeist wird, während hingegen im zweiten Betriebszustand das aus der ersten Flut (21a) des Brauchwasser-Wärmetauschers (21) austretende Wärmeträgermedium in einen unteren Bereich des Speicherbehälters (2) eingespeist wird.

5. Verfahren nach einem der Ansprüche 1 bis 4, **dadurch gekennzeichnet, dass** zwischen dem ersten Betriebszustand und dem zweiten Betriebszustand eine Fülle weiterer Betriebszustände ansteuerbar sind, die unterschiedliche Verhältnisse der Massenströme des Wärmeträgermediums durch die erste Wärmequelle (20) bzw. durch die erste Flut (21a) des Brauchwasser-Wärmetauschers (21) aufweisen.

6. Verfahren nach einem der Ansprüche 1 bis 5, **dadurch gekennzeichnet, dass** das Wärmeträgermedium zur Brauchwasserbereitung direkt in ein Heizungssystem (3a, 3b) eingespeist wird, wobei vorzugsweise das Wärmeträgermedium für ein erstes Heizungssystem (3a) einer Hochtemperaturleitung (25) entnommen wird, die die stromabwärtige Seite der ersten Wärmequelle (20) mit dem Speicherbehälter (2) verbindet, während weiter vorzugsweise das Wärmeträgermedium für ein zweites Heizungssystem (3b) einer Niedertemperaturleitung (26) entnommen wird, die die stromaufwärtige Seite der ersten Wärmequelle (20) mit dem Speicherbehälter (2) verbindet.

7. Verfahren nach Anspruch 6, **dadurch gekennzeichnet, dass** der Rücklauf mindestens eines Heizungssystems (3b) unterhalb der Anschlüsse des Brauchwasser-Erwärmungssystems in den Speicherbehälter (2) rückgeführt wird.

8. Verfahren nach einem der Ansprüche 1 bis 7, **dadurch gekennzeichnet, dass** ein Solarkollektor (1) bei Sonneneinstrahlung mit dem Wärmeträgermedium gefüllt und durchströmt wird, um das Wärmeträgermedium zu erwärmen, und bei dem der Solarkollektor (1) ansonsten entleert wird, wobei das Wärmeträgermedium in einem Speicherbehälter (2) gesammelt wird, in dem das Wärmeträgermedium vorzugsweise eine freie Oberfläche aufweist, und wobei das Wärmeträgermedium im Speicherbehälter (2) und im Solarkollektor (1) unter erhöhtem Druck gehalten wird, und dass der Speicherbehälter (2) in allen Betriebszuständen teilweise mit Wärmeträgermedium und teilweise mit Gas gefüllt ist.

9. Vorrichtung zur Erwärmung von Brauchwasser und gegebenenfalls zur Bereitstellung von Wärme zur Beheizung von Gebäuden, mit einer ersten Wärmequelle (20), einem Speicherbehälter (2) und einem Brauchwasser-Wärmetauscher (21) zur Erwärmung von Brauchwasser, wobei die stromabwärtige Seite der ersten Wärmequelle (20) über eine Hochtemperaturleitung (25) mit dem Speicherbehälter (2) verbunden ist und die stromaufwärtige Seite der ersten Wärmequelle (20) über eine Niedertemperaturleitung (26) mit dem Speicherbehälter (2) verbunden ist, und mit einer ersten Umwälzpumpe (22), die die Durchströmung der ersten Wärmequelle (20) bewirkt, **dadurch gekennzeichnet, dass** eine erste Flut (21a) des Brauchwasser-Wärmetauschers (21) mit einer in Serie geschalteten zweiten Umwälzpumpe (23) von der Hochtemperaturleitung (25) versorgt ist und in die Niedertemperaturleitung (26) entwässert und dass die zweite Umwälzpumpe (23) unabhängig von der ersten Umwälzpumpe (22) ansteuerbar ist.

10. Vorrichtung nach Anspruch 9, **dadurch gekennzeichnet, dass** mit der ersten Flut (21a) des Brauchwasser-Wärmetauschers (21) ein erstes Mischventil (24) und eine Misch-Leitung (24a) in Verbindung steht, über die ein Teilstrom des Wärmeträgermediums im Kreislauf führbar ist.

11. Vorrichtung nach einem der Ansprüche 9 oder 10, **dadurch gekennzeichnet, dass** im Speicherbehälter (2) ein weiterer Wärmetauscher (10) vorgesehen ist, dessen stromaufwärtige Seite mit einem Kaltwasseranschluss verbunden ist und dessen stromabwärtige Seite mit einem zweiten Mischventil (28) verbunden ist, das an eine zweite Flut (21b) des Brauchwasser-Wärmetauschers (21) angeschlossen ist.

12. Vorrichtung nach einem der Ansprüche 9 bis 11, **dadurch gekennzeichnet, dass** eine Steuerungseinrichtung (29) vorgesehen ist, die die erste Umwälzpumpe (22) und die zweite Umwälzpumpe (23) in einem ersten Betriebszustand so ansteuert, dass der Massenstrom des Wärmeträgermediums durch die erste Wärmequelle (20) größer ist als der Massenstrom des Wärmeträgermediums durch die erste Flut (21a) des Brauchwasser-Wärmetauschers (21) und in einem zweiten Betriebszustand so ansteuert, dass der Massenstrom des Wärmeträgermediums durch die erste Wärmequelle (20) kleiner ist als der Massenstrom des Wärmeträgermediums durch die erste Flut (21a) des Brauchwasser-Wärmetauschers (21).

13. Vorrichtung nach einem der Ansprüche 9 bis 12, **dadurch gekennzeichnet, dass** ein Heizungssystem (3a, 3b) vorgesehen ist, das hydraulisch direkt mit dem Speicherbehälter (2) in Verbindung steht, wobei vorzugsweise ein erstes Heizungssystem (3a), das durch die Hochtemperaturleitung (25) versorgt wird, und ein zweites Heizungssystem (3b), das durch die Niedertemperaturleitung (26) versorgt wird, vorgesehen sind, die an ihrer stromabwärtigen Seite mit dem Speicherbehälter (2) in Verbindung stehen.

14. Vorrichtung nach einem der Ansprüche 9 bis 13, **dadurch gekennzeichnet, dass** zur Erwärmung des Wärmeträgermediums als zweite Wärmequelle ein Solarkollektor (1) vorgesehen ist und dass das System aus Solarkollektor (1), Speicherbehälter (2), erster Wärmequelle (20) und gegebenenfalls Heizungssystem (3a, 3b) als geschlossenes, unter Druck mit einem einzigen Wärmeträgermedium füllbares System ausgebildet ist und dass der Speicherbehälter (2) zusätzlich zum Wärmeträgermedium mit Gas füllbar ist und vorzugsweise in seinem oberen Abschnitt einen Gasraum (12) aufweist, der direkt oberhalb einer Oberfläche (11) des Wärmeträgermediums ausgebildet ist.

15. Vorrichtung nach Anspruch 14, **dadurch gekennzeichnet, dass** eine Zufuhrleitung (4) zum Solarkollektor (1) vorgesehen ist, die vom unteren Bereich (13) des Speicherbehälters (2) ausgeht und in der eine Förderpumpe (5) vorgesehen ist, und dass eine Rückführleitung (6) vorgesehen ist, die in einen oberen Bereich (12) des Speicherbehälters (2) mündet, der oberhalb einer maximalen Füllgrenze für das Wärmeträgermedium liegt.

16. Vorrichtung nach einem der Ansprüche 9 bis 15, **dadurch gekennzeichnet, dass** im Speicherbehälter (2) Mittel zur Aufrechterhaltung einer Temperaturschichtung angeordnet sind, die vorzugsweise zur Aufrechterhaltung einer Temperaturschichtung als Schichtrohr (7) ausgebildet sind.

17. Vorrichtung nach einem der Ansprüche 9 bis 16, **dadurch gekennzeichnet, dass** erste Wärmequelle (20) als Gas-Brennwertgerät, Stirling-Motor, Brennkraftmaschine oder als Brennstoffzelle ausgebildet ist.
